# EUROPEAN PATENT APPLICATION

(11) **EP 0 525 261 A1**
(43) Date of publication of application: **03.02.1993**
(21) Application number: 91307045.4
(22) Date of filing: 31.07.1991
(51) Int. Cl.: F16J 15/32, F16K 41/02

(54) **Stem seal**

(71) Applicant: COOPER INDUSTRIES INC., Houston Texas 77002 (US)
(72) Inventor: Gill, David, Otley, West Yorkshire LS21 3LY (GB); Haynes, Brian, Ackworth, West Yorkshire WF7 7PE (GB)
(74) Representative: Jackson, Peter Arthur

(57) **Abstract**

A metal seal (15) between a metal stem (13) and a housing (14) comprises an annular body (19) with axially projecting radially outer and inner sealing flanges (20 and 21). The flange (20) makes a static seal with the housing and the flange (21) is axially tapering and arranged to curve into contact with the stem, the contact length increasing with increasing working pressure and hence increasing deflection of the flange (21).

## Description

The invention relates to a metal seal for sealing between a housing and a metal stem, which is axially relatively movable within the housing, the seal having an annular seal body which is arranged to surround the stem within the housing, and two divergent radially inner and radially outer annular flanges which extend from the body in one axial direction, in use to the side of the seal to be subjected to higher pressure. The radially outer flange is arranged to form a static seal against the housing, and the radially inner flange having a radially inner sealing surface which is arranged in such a way as to form a dynamic or static seal against the stem. Such a seal is hereinafter referred to as "of the kind described".

With seals of this kind, increasing fluid working pressure applied between the flanges causes progressive deflection of at least the inner flange, thereby progressively changing its attitude relatively to the stem.

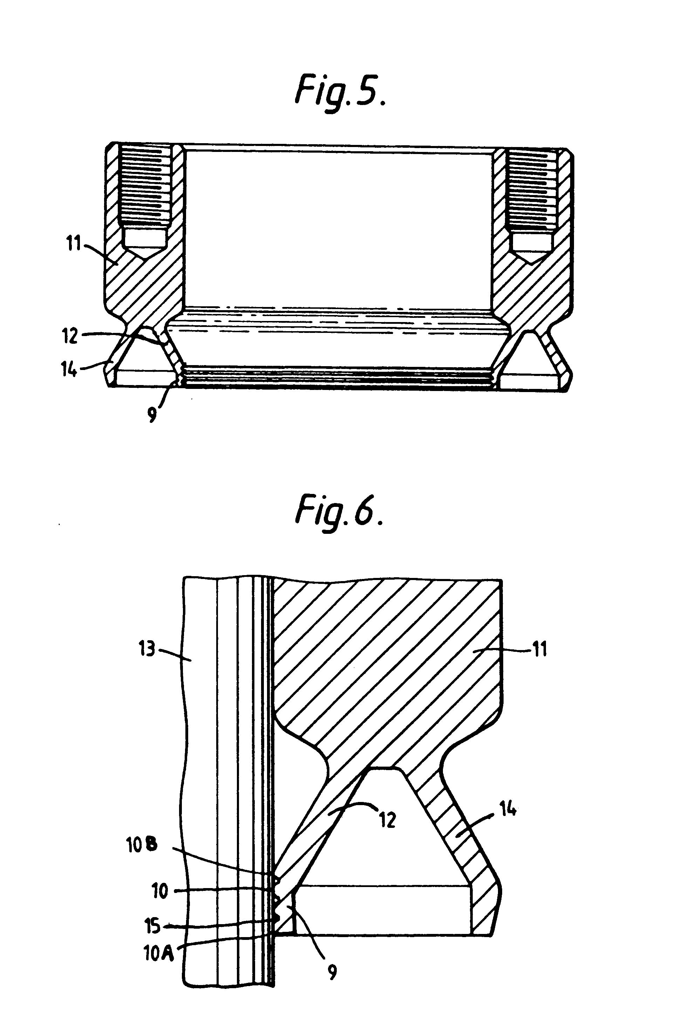

In one prior seal of this kind shown in Figures 5 and 6 of the accompanying drawings, the inner flange has exhibited a structurally stiff sealing portion 9 having, in the relaxed state, a radially inner frusto-conically tapering sealing surface 10; this portion being connected to the seal body 11 by a less structurally stiff root portion 12. Consequently, when the seal is fitted to a stem 13, with minimal pressure applied between the inner and outer flanges 9,12 and 14, only the sharp edge 10A at the end of the sealing surface 10 remote from the seal body engages the stem. As the working pressure increases, the root portion 12 deflects to change the attitude of the sealing portion 9 so that its sealing surface 10 progressively changes from a tapering frusto-conical surface to a cylindrical surface matching that of the stem, as shown in Figure 6. If the working pressure increases beyond this value, the root flexes even more and the sealing portion 9 rocks on the stem about a fulcrum formed by the edge 10B of the sealing surface adjacent to the root, so that the sealing surface adopts the attitude of a divergent frusto-conical surface. It is therefore only over a very narrow range of working pressures, corresponding to the design pressure, that the sealing surface contacts the stem over the full length of the sealing surface. At higher or lower working pressures one or other of the sharp end edges of the sealing surface may develop sufficiently high local pressures as to reduce the lubricant film thickness below the stem surface roughness height - causing film collapse; or may overcome the shear strength of lubrication on the stem. Either of those events may cause the seal lip to bite into the stem with excessive local pressure, which may promote cold welding and thus inhibit movement of the stem, or penetrate a, for example, tungsten carbide, coating on the stem. Furthermore, when the working pressure is greater than the design pressure so that the sealing surface of the inner flange has adopted the attitude of a divergent frusto-cone, the working pressure will act between the stem and sealing surface and tend to lift the inner flange off the stem, so that the seal may fail. As a rule of thumb, it is desirable for the sealing pressure between the sealing surface of the inner flange and the stem to achieve a minimum of twice and preferably three times the working pressure applied to the seal. The sealing surface 10 is formed with a series of axially spaced annular grooves 15 for lubricant retention purposes.

It is therefore an object of the present invention to improve a seal of the kind described to overcome the above disadvantages and to enable the sealing pressure between the sealing surface of the inner flange and the stem to be maintained within an acceptable range, in spite of a large variation in the working pressure applied to the seal.

According to the present invention, a metal seal of the kind described is characterised in that in the relaxed state, both the sealing surface and the wall thickness of the inner flange taper towards the free end of that flange so that the stiffness of the inner flange decreases towards the free end. In use, as working pressure is progressively applied to the seal between the flanges, a progressively increasing length of the inner flange from the free end is bent into contact with the stem. The sealing surface of the inner flange is provided adjacent to the free end with a plurality of axially spaced grooves.

With this construction, increasing working pressure applied to the seal progressively deflects the inner flange from its free end and no perceptible deflection occurs at the root of the flange where it merges into the seal body. It follows that, at any given working pressure, the sealing surface will lead into a tangential contact with the stem, between which contact point and end of the sealing surface adjacent to the free end of the inner flange the sealing surface will be in intimate contact with the stem. The length of this contact is dependent on the seal and stem geometries and the applied pressure, but will always increase as the applied pressure increases. By this means, the sealing pressure can be maintained within an acceptable maximum.

Axially spaced grooves are formed in the sealing surface, adjacent to the free end of the inner seal flange. The grooves serve to increase the sealing pressure between seal and stem by locally reducing the seal to stem contact area. Within the full working pressure range this enables the sealing pressure to be maintained above the acceptable minimum.

The grooves may also serve the function of holding lubricant and trapping and holding any small particles of abrasive material which may be present in such a way as to enter between the sealing surface and stem.

Although the actual geometry is dependent upon stem diameter, the sealing surface of the inner flange may, in the relaxed state before fitting to a stem, have a frusto-conical taper at a half angle of between 0.8 and 1.3 degrees. The radially outer surface of the inner flange may then taper frusto-conically at a half angle of between 5 and 6 degrees.

The sealing surface will also preferably be such that, in the relaxed state, the position at which the diameter of the sealing surface corresponds to that of the stem with which the seal is to be used, will occur at a distance of between 1/3 and a 2/3, preferably substantially 1/2, of the way along the sealing surface towards the seal body from its end adjacent to the free end of the inner flange.

This distance and the internal conical taper are arranged in such a way that the inside diameter of the free end of the radially inner flange is smaller in the relaxed state than the stem onto which it is to seal by approximately 0.2% - this being the amount of radial strain on installation which will induce stresses in the free end of the flange which approach the yield point of the material.

The invention will now be described by way of example and by comparison with the prior art with reference to the accompanying drawings, in which:
Figure 1 is an axial section through part of a valve assembly incorporating a seal constructed in accordance with the invention;
Figure 2 is an enlargement of part of Figure 1;
Figure 3 is an axial section of the seal constructed in accordance with the present invention and used in the assembly of Figures 1 and 2;
Figure 4 is an enlarged axial sectional detail showing how the seal of Figure 3 engages a valve stem in the Figures 1 and 2 assembly;
Figure 5 is an axial section corresponding to Figure 3 but of the prior seal previously referred to; and,
Figure 6 is a partial section corresponding to Figure 4 but showing the prior seal of Figure 5 under optimum working pressure.

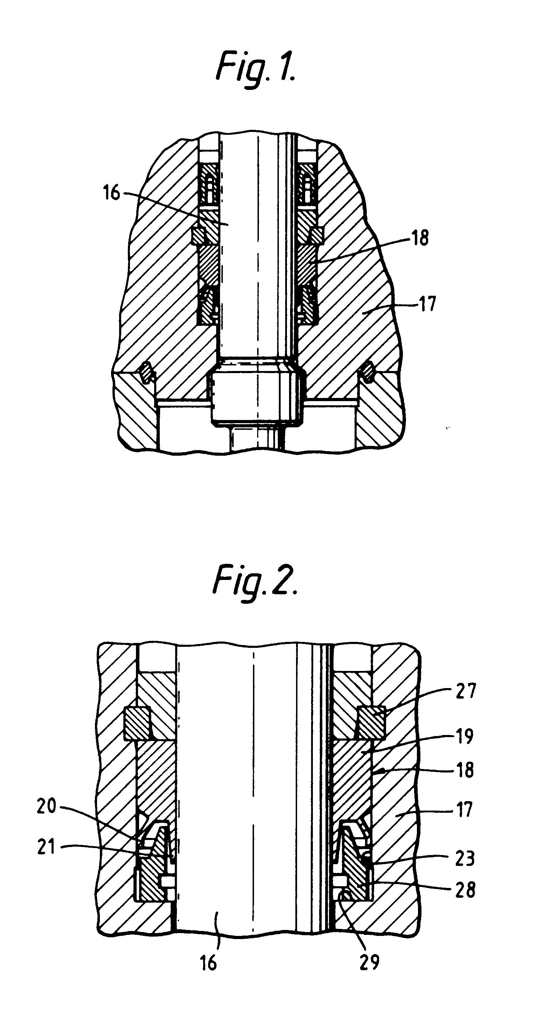

As shown in Figures 1 and 2, a metal valve stem 16, such as the stem of a valve of a kind used in a blow out preventer or christmas tree at a wellhead installation in an oil or gas field, is axially movable within a housing 17. A seal 18 of a kind with which the invention is concerned is mounted in a radial clearance between the stem and the housing, the seal being located axially between a split ring 27 in the housing wall and a junk ring 28 which engages a shoulder 29 of the housing. The seal is of unitary construction and may be formed of a nickel chromium alloy.

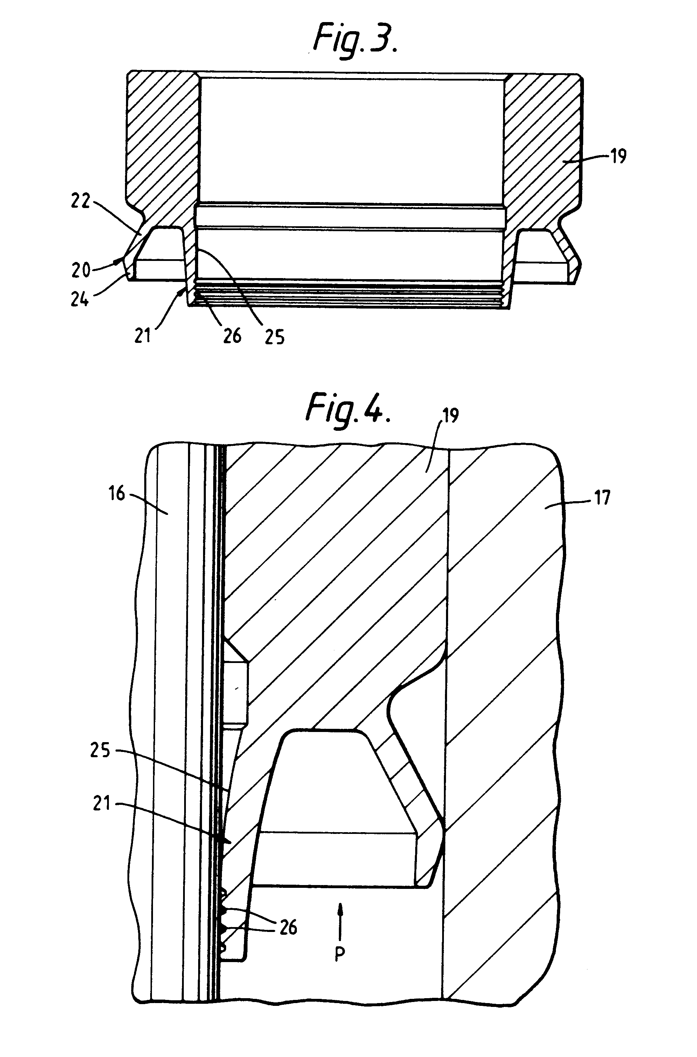

As shown in Figures 2 and 3, the seal comprises an annular body 19 of substantially rectangular section, which carries radially outer and inner seal flanges 20,21. The outer flange 20 diverges from a point on the axial end face of the body 19 which is close to the mid point of the radial thickness of the body, whereas the inner flange extends from a point which is at the junction of the axial end face and the bore of the body 19.

The outer flange 20 has a diverging frusto-conical portion 22 of substantially constant wall thickness with a half angle of conicity of 30 degrees. In the relaxed state of the seal as shown in Figure 3, that is before it is fitted to a stem and housing, the major diameter of this portion is greater than the diameter of the bore 23 of the housing into which it is to be installed. Sealing is thus effected by the installation of the seal into this bore, and requires no further activation. Beyond the major diameter of the portion 22, it merges into a portion 24 having a radially outer tapering frusto-conical outer surface, and a cylindrical inner surface, and thus a tapering wall thickness. The external taper facilitates installation into the housing.

The inner flange 21 exhibits a frusto cone with a tapering wall thickness, being thickest at the point of juncture with the seal body 19. The radially inner surface of the flange 21 provides, in the relaxed state, a frusto-conical sealing surface 25 with a half angle of conicity of substantially one degree, the exact magnitude of this angle being dependent upon the diameter of the stem to be sealed. The minimum diameter of the sealing surface at its end remote from the seal body and adjacent to the free end of the flange 21 is smaller than the diameter of the stem on to which the seal is to be made so that a seal is effected by the installation of the stem and requires no further activation. The angle of taper of the thickness of the flange 21 is substantially 4.5 degrees.

The sealing surface 25 has, adjacent to the free end of the inner flange 21, four annular grooves 26 cut into it. These serve to control and improve the distribution and magnitude of bearing pressures between the stem and the seal in this region as previously described.

On installation of the stem, the inner flange, leading from the seal body 19, deflects into a shallow curve which is ultimately tangential to the stem and thereafter the inner flange lies in a cylindrical configuration along the stem. There is thus no discontinuity of the contact interface, and as the working pressure P is increased, the flange deflects progressively to give a longer area of contact between the stem and sealing surface. This additional area is then available for providing support to the inner flange, resisting the additional pressure and facilitating the pressure energization of the seal at higher working pressures. This geometry, whereby the inner flange is tapered in section, being thickest at the root where the flange is attached to the seal body gives maximum flexibility at the extreme end of the flange, whilst maintaining a stiff, self supporting section at the root of the flange.

## Claims

1. A metal seal (18) for sealing between a housing (17) and a metal stem (16), which is axially relatively movable within the housing, the seal having an annular seal body (19) which is arranged to surround the stem within the housing, and two divergent, radially inner (21) and radially outer (20) annular flanges, which extend from the body in one axial direction, in use to the side of the seal to be subjected to working pressure (P), the radially outer one of the flanges being arranged to form a static seal with the housing, and the radially inner one of the flanges having a radially inner sealing surface (25), which, in the relaxed state, tapers towards the free end of that flange, and a wall thickness, which tapers in the same direction so that the stiffness of the inner flange decreases towards the free end and, in use, as working pressure is progressively applied to the seal between the flanges, a progressively increasing length of the inner flange from its free end is bent into contact with the stem, and the inner surface of the inner flange being provided adjacent to the free end with a plurality of axially spaced grooves (26).

2. A seal according to claim 1, in which the sealing surface (25) tapers frusto-conically and tapers at a half angle of between 0.8 and 1.3 degrees.

3. A seal according to claim 2, in which, in the relaxed state, the radially outer surface of the inner flange (21) tapers frusto-conically at a half angle of between 5 and 6 degrees.

4. An assembly of a housing (17) surrounding a relatively movable stem (16) to which it is sealed by a metal seal (18) according to any one of the preceding claims.

5. An assembly according to claim 4, in which, in the relaxed state, the position at which the diameter of the sealing surface (25) corresponds to that of the stem (13), occurs at a distance of between 1/3 and 2/3 of the way along the sealing surface towards the seal body (19) from its end adjacent to the free end of the inner flange (21).

6. An assembly according to claim 4, in which the distance is substantially 1/2 of the length of the sealing surface (25).
